# EUROPÄISCHE PATENTSCHRIFT

(11) **EP 2 092 288 B1**
(45) Veröffentlichungstag und Bekanntmachung des Hinweises auf die Patenterteilung: **13.03.2019**
(21) Anmeldenummer: 07819659.9
(22) Anmeldetag: 07.11.2007
(51) Int. Cl.: G01L 25/00

(54) **VORRICHTUNG UND VERFAHREN ZUM KALIBRIEREN VON DREHMOMENT-MESSVORRICHTUNGEN**
DEVICE AND METHOD FOR CALIBRATING TORQUE MEASURING DEVICES
DISPOSITIF ET PROCÉDÉ D'ÉTALONNAGE DE SYSTÈMES DE MESURE DE COUPLE

(30) Priorität: 24.11.2006 DE 102006055614
(43) Veröffentlichungstag der Anmeldung: 26.08.2009
(73) Patentinhaber: HORIBA Europe GmbH, 64293 Darmstadt (DE)
(72) Erfinder: PAETSCHKE, Klaus, 68642 Bürstadt (DE); KÜNNE, Kai, 68519 Viernheim (DE); HILL, Gunther, 64560 Riedstadt (DE); LIMAN, Frank, 64354 Reinheim (DE)
(74) Vertreter: Müller Hoffmann & Partner
(86) Internationale Anmeldenummer: PCT/EP2007/009649
(87) Internationale Veröffentlichungsnummer: WO 2008/061629

(56) Entgegenhaltungen:
- EP-A- 0 756 165
- AT-U2- 7 709
- JP-A- 5 332 874

## Beschreibung

Die Erfindung betrifft eine Vorrichtung und ein Verfahren zum Kalibrieren einer Drehmoment-Messeinrichtung.

Derartige Drehmoment-Messeinrichtungen werden insbesondere in Prüfständen, wie z. B. Motoren- oder Getriebeprüfständen für die Automobilindustrie eingesetzt und unterstützen die Forschung und Entwicklung mit Hilfe von z. B. Funktionstests, Dauerlaufversuchen zur mechanischen Belastungsprüfung sowie Verbrauchs-, Abgas-, Geräusch- oder Klimauntersuchungen. Die Motorenprüfstände simulieren hierbei den Betrieb des Motors in einem kompletten Fahrzeug unter verschiedenen Umwelt- oder Anwendungsbedingungen. In dem Prüfstand kann der zu prüfende Motor mit einer Belastungseinheit, z. B. einer Asynchronmaschine, einer hydraulischen Leistungsbremse oder einer Wirbelstrombremse gekoppelt werden. Die Belastungseinheit simuliert die Last, gegen die der Motor im realen Betrieb arbeiten muss.

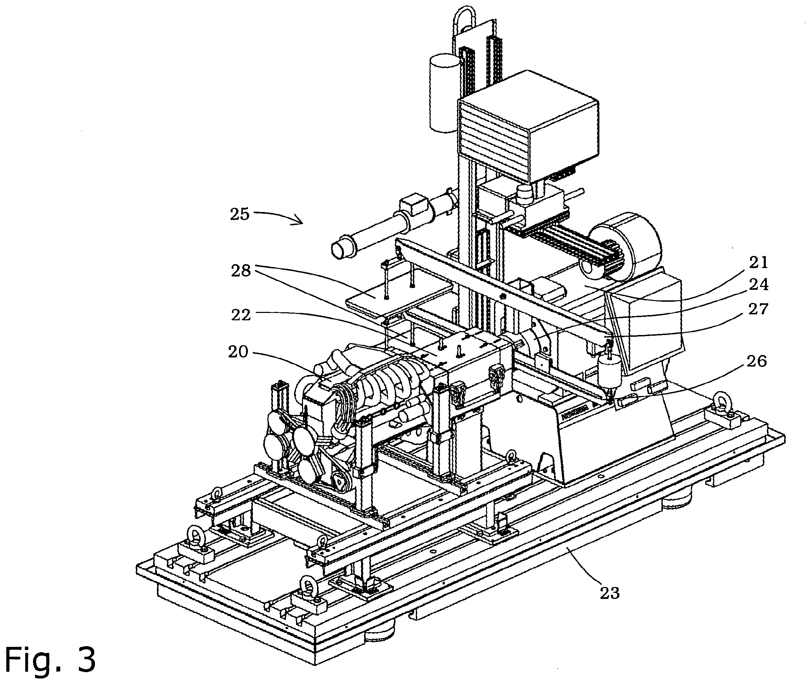

Fig. 3 zeigt einen bekannten, von der Firma HORIBA ATS GmbH unter der Bezeichnung "Titan" vertriebenen Motorprüfstand, mit einem zu prüfenden Motor 20, einer als Belastungseinheit dienenden Asynchronmaschine 21 und einem den Motor 20 mit der Asynchronmaschine koppelnden Wellen- und Kupplungsstrang, der unter einer Abdeckung 22 verborgen ist. Die Einheiten sind auf einer gemeinsamen Maschinenbasis 23 befestigt.

Neben zahlreichen Messgrößen ist das zwischen dem Motor und der Belastungseinheit wirkende Drehmoment (Betrag und Drehrichtung) von besonderer Bedeutung. Zu diesem Zweck ist im Drehmomentfluss zwischen Motor und Belastungseinheit ein Prüflings-Drehmomentaufnehmer 24 eingesetzt, mit dem das wirkende Drehmoment im Betrieb des Prüfstands, also auch bei rotierender Verbindungswelle zwischen Motor und Belastungseinheit gemessen werden kann.

Da an die Genauigkeit der Drehmomentmessung hohe Anforderungen gestellt werden, muss der Prüflings-Drehmomentaufnehmer von Zeit zu Zeit kalibriert werden.

Zum Kalibrieren werden der Motor und eventuell vom Motor herkommende Wellenteile und Kupplungen entfernt, sodass der Prüflings-Drehmomentaufnehmer zugänglich ist. Auf den Prüflings-Drehmomentaufnehmer wird daraufhin ein bestimmtes Referenz-drehmoment aufgebracht, dessen Wert mit dem vom Prüflings-Drehmomentaufnehmer gemessenen Drehmomentwert verglichen wird, um nachfolgend eine Justage durchzuführen.

Das Referenz-Drehmoment muss mit größtmöglicher Genauigkeit vorbestimmt sein bzw. vorgewählt werden können. Zu diesem Zweck hat sich insbesondere ein auf dem Doppelhebelprinzip basierendes Kalibrierverfahren bewährt, bei dem eine Einleitung eines reinen Drehmoments ohne Querkraft direkt am Messflansch des Prüflings-Drehmomentaufnehmers möglich ist. Anhand der auf die Doppelhebelkonstruktion wirkenden, vom Bediener manuell eingesetzten Gewichte lässt sich das am Messflansch wirkende Referenz-Drehmoment mit hoher Präzision vorbestimmen.

In Fig. 3 ist eine derartige, auf dem Doppelhebelprinzip beruhende Kalibriervorrichtung 25 zwischen der Abdeckung 22 des Wellen- und Kupplungsstrangs und der Asynchronmaschine 21 angeordnet. Die Kalibriervorrichtung 25 weist einen auf Höhe der Wellenachse angeordneten unteren Hebel 26 und einen darüber angeordneten oberen Hebel 27 auf, die in an sich bekannter Weise miteinander zusammenwirken. Zum Kalibrieren muss der Bediener manuell Gewichte auf Gewichtsablagen 28 platzieren, wodurch die Hebel 26, 27 in der gewünschten Weise belastet werden.

Aus der EP 0 756 165 A2 ist ein Verfahren und eine Vorrichtung zur Kalibrierung von Drehmoment-Messeinrichtungen bekannt. Dabei wird das an der Welle von einer umlaufenden Maschine abgegebene Drehmoment stationär in einfacher Weise über das Reaktionsmoment des Maschinengehäuses bestimmt. Das Maschinengehäuse ist als Pendelkörper gelagert, der sich auf einen Kraftaufnehmer abstützt, der die abstützende Reaktionskraft in ein elektrisch auswertbares Messsignal umsetzt. Dieses Messsignal ist ein Maß für das Reaktionsmoment. Zum Kalibrieren des Kraftaufnehmers, der ein Bestandteil der Drehmoment-Messeinrichtung ist, wird ein Gewicht auf einem an dem Maschinengehäuse befestigten Belastungsarm aufgebracht. Dadurch wird auf das pendelnd gelagerte Maschinengehäuse ein Referenz-Drehmoment ausgeübt, dessen Größe sich als das Produkt aus der Gewichtskraft und der wirksamen Hebellänge bestimmt. Das Referenz-Drehmoment wird mit dem über den Kraftaufnehmer ermittelten Drehmoment verglichen.

In der AT 007 709 U2 ist eine Kalibrieranordnung mit einem Kalibrierhebel beschrieben.

Die JP H05 332874 A befasst sich mit einer statischen Drehmomentsüberwachung durch Erhöhung des Anzugsdrehmoments eines Kupplungsfutterteils auf einen vorgegebenen Wert und mit dem Stabilisieren des Drehmoments. Hierzu ist zwischen einem Kupplungsspannfutterteil und einem Rohrfutterteil ein Referenzdrehmomentsensor angeordnet, in dem Bezugsrohre mit beiden Enden verbunden sind. Stäbe sind in eine Hülse mit einem rechtsdrehenden Gewinde und den linksdrehendem Gewinde am oberen und unteren Ende geschraubt. Auf einem Arm, der an der Spitze eines Stabes vorgesehen ist, ist ein Abtriebswellen-Halte- und Befestigungselement in einer halbgeteilten Form vorgesehen. Eine Spannvorrichtung mit dem Schwenkteil zur Basisstufe eines Motors wird an der Spitze des anderen Stabes verwendet. Eine Abtriebswelle des Motors ist mit dem Ausgangswellen-Halte- und Befestigungselement der Spannvorrichtung verbunden, die auf die Basisstufe geschwenkt ist. Eine Hülse wird manuell gedreht, um die Stangen vorzuschieben. Dadurch werden die Ausgangswelle und das Kupplungsspannfutterteil gedreht. Die Ausgabewerte des Referenzdrehmomentsensors und eines Drehmomentdetektors werden in eine Steuereinrichtung eingegeben. Der Fehler des Drehmomentdetektors mit Bezug auf den Referenzdrehmomentsensor wird durch Vergleich und Betrieb getestet.

Der Erfindung liegt die Aufgabe zugrunde, eine Vorrichtung und ein Verfahren anzugeben, mit dem die Genauigkeit des Kalibrierens verbessert und gleichzeitig der Bedienvorgang für den Bediener vereinfacht werden kann.

Erfindungsgemäß wird die Aufgabe durch eine Vorrichtung gemäß Anspruch 1 und ein Verfahren gemäß Anspruch 14 gelöst.

Eine Vorrichtung zum Kalibrieren einer Drehmoment-Messeinrichtung weist auf: eine Kraftwirkungseinrichtung zum Erzeugen einer Kraftwirkung; einen mit der Kraftwirkungseinrichtung gekoppelten und die Kraftwirkung übertragenden Hebelarm, der einen um eine Hauptachse verschwenkbar gelagerten Lagerflansch aufweist; einen axial zu dem Lagerflansch angeordneten und mit dem Lagerflansch gekoppelten Referenz-Drehmomentaufnehmer; und einen axial zu dem Referenz-Drehmomentaufnehmer vorgesehenen Anschlussbereich, an dem ein die zu kalibrierende Drehmoment-Messeinrichtung bildender Prüflings-Drehmomentaufnehmer ankoppelbar ist. Der Lagerflansch des Hebelarms ist auf einem Pendellager gelagert. Das Pendellager ermöglicht in gewissen Grenzen einen Winkelausgleich, um Fehlstellungen der einzelnen Wellenelemente ausgleichen zu können. Als Pendellager eignen sich z. B. Pendelkugellager oder Pendelrollenlager.

Die Kalibriervorrichtung lässt sich zum turnusmäßigen Kalibrieren der Drehmoment-Messeinrichtung, also des Prüflings-Drehmomentaufnehmers in geeigneter Weise anbauen, wobei der Prüflings-Drehmomentaufnehmer dann an dem Anschlussbereich angekoppelt sein muss. Mit Hilfe der Kraftwirkungseinrichtung wird eine Kraft erzeugt, die durch die Übertragung über den Hebelarm ein Drehmoment am Lagerflansch bewirkt. Das Drehmoment wird an den Referenz-Drehmomentaufnehmer angelegt und kann mit dessen Hilfe gemessen werden, sodass ein Referenz-Drehmomentwert bestimmt wird. Das Drehmoment wird weiterhin auf den axial zum Referenz-Drehmomentaufnehmer angeordneten Prüflings-Drehmomentaufnehmer übertragen und dort ebenfalls gemessen, sodass sich ein Prüflings-Drehmomentwert ergibt. Der Referenz-Drehmomentwert und der Prüflings-Drehmomentwert sind dann zu vergleichen, wonach die Messwerte des Prüflings-Drehmomentaufnehmers derart zu korrigieren sind, dass der Prüflings-Drehmomentwert dem Referenz-Drehmomentwert entspricht.

Bei der Vorrichtung ist es somit in weiten Bereichen unerheblich, was für eine Kraft bzw. was für ein Drehmoment in die Vorrichtung eingeleitet wird. Jedenfalls wird das tatsächlich in der Hauptachse wirkende Drehmoment durch den Referenz-Drehmomentaufnehmer präzise gemessen und steht somit als Referenzwert für den Prüflings-Drehmomentaufnehmer zur Verfügung. Eventuelle Reibungseinflüsse oder andere Störeinflüsse, die z. B. bei dem Doppelhebel-Prinzip entstehen können, werden weitgehend ausgeschlossen. Aufgrund der einfachen Krafteinleitung über die Kraftwirkungseinrichtung und den Hebelarm werden z. B. weniger Lagerstellen benötigt, in denen Reibungsverluste entstehen könnten.

Die Kraftwirkungseinrichtung kann eine fluidbetriebene Zylindereinheit, eine elektromotorisch betriebene Spindel-Gewindeeinheit oder einen Servomotor mit Planetengetriebe aufweisen. Dabei ist vor allem eine konstante Kraftwirkung anzustreben, um daraus resultierend einen konstanten Referenz-Drehmomentwert zu erhalten.

Insbesondere kann die Kraftwirkungseinrichtung einen über ein Proportionalventil geregelten Pneumatikzylinder oder Hydraulikzylinder aufweisen. Die Zylinder lassen sich mit großer Präzision ansteuern und gewährleisten eine zuverlässige, konstante Kraftwirkung. Zudem ist die Ansteuerung des Zylinders automatisierbar und kann schneller erfolgen, als dies beim manuellen Bewegen von Referenzgewichten beim Stand der Technik möglich war.

Der Lagerflansch kann kraftwirkungsmäßig direkt über dem Pendellager gelagert sein, derart, dass Querkräfte, die über den Lagerflansch eingeleitet werden, sämtlich von dem Pendellager aufgenommen werden. Die Kraftwirkungseinrichtung erzeugt eine senkrecht zur Hauptachse stehende Kraft, die dementsprechend als Querkraft abgestützt werden muss. Diese Querkraft kann über den Lagerflansch direkt auf das Pendellager übertragen werden, ohne dass Querkraftanteile in die weiteren Bereiche der Welle oder der sich anschließenden Komponenten eingeleitet werden. Dadurch wird ein weiterer Störeinfluss ausgeschlossen.

Es kann eine Steuerungseinrichtung zum Ansteuern der Kraftwirkungseinrichtung vorgesehen sein, die ein Kalibrierprogramm zum automatischen Ansteuern der Kraftwirkungseinrichtung entsprechend einer vorgegebenen Kalibrierprozedur aufweist. Zum Beispiel sind bestimmte Kalibriervorgänge genormt und müssen zum vollständigen Kalibrieren der Messeinrichtung durchgeführt werden. Die entsprechend erforderlichen Prozeduren, insbesondere die geforderten Kraftwirkungen, können von der Steuerungseinrichtung automatisch an der Kraftwirkungseinrichtung eingestellt werden. Dabei kann es zweckmäßig sein, wenn z. B. der Messwert vom Referenz-Drehmomentaufnehmer und/oder vom Prüflings-Drehmomentaufnehmer in die Steuerungseinrichtung rückgeführt wird, um die Wirkungen der Kraftwirkungseinrichtung überwachen zu können.

Der Referenz-Drehmomentaufnehmer und/oder der Prüflings-Drehmomentaufnehmer können als Drehmoment-Messflansch ausgebildet sein. Als Drehmoment-Messflansch eignet sich zum Beispiel das Gerät T10FS der Firma Hottinger Baldwin Messtechnik GmbH. Selbstverständlich können auch andere Drehmoment-Messprinzipien genutzt werden, wobei sich ein Drehmoment-Messflansch bewährt hat, bei dem ein axiales Scherprinzip die Grundlage der Messung bildet. Wegen der im Betrieb des Prüfstands wirkenden hohen Drehzahl sollten keine Unwuchten am Messkörper auftreten. Zudem sollten das Massenträgheitsmoment und der Verdrillwinkel möglichst gering sein, um die Maschinendynamik des Motorenprüflings nicht zu beeinflussen. Weiterhin muss die Möglichkeit zur rotationslosen Drehmomenterfassung gegeben sein, um den Drehmomentaufnehmer im Stillstand kalibrieren zu können.

Axial zwischen dem Referenz-Drehmomentaufnehmer und dem Prüflings-Drehmomentaufnehmer kann eine Ausgleichskupplung angeordnet sein, die dazu geeignet sein kann, einen Lateralversatz, einen Axialversatz und/oder einen Winkelversatz auszugleichen. Mit Hilfe der Ausgleichskupplung ist es möglich, Störeinflüsse auf den Referenz-Drehmomentaufnehmer und den Prüflings-Drehmomentaufnehmer aufgrund der Entkopplungswirkung der Kupplung zu vermindern. Als Ausgleichskupplung eignet sich z. B. eine Stahl-Lamellenkupplung, die einen leichten Axialversatz, aber auch einen Winkel- und einen Querversatz zulässt.

Zur Realisierung des Quer- bzw. Lateralversatzes ist es erforderlich, dass sich im Wellenstrang zusätzlich noch eine weitere Gelenkmöglichkeit befindet, um die erforderliche Aufhängung mit zwei Gelenkpunkten zu bilden. Zu diesem Zweck wirkt die Ausgleichskupplung mit dem Pendellager zusammen, welches das zusätzliche Gelenk bildet.

Es können eine Lagerstelle zum Tragen des Pendellagers sowie eine Ausrichtvorrichtung vorgesehen sein, zum vertikalen, horizontalen und/oder axialen Positionieren der Lagerstelle relativ zu einer Maschinenbasis. Auf diese Weise ist es möglich, die Lagerstelle präzise in der Position zu halten, in der das Pendellager exakt zu dem Referenz-Drehmomentaufnehmer und dem Prüflings-Drehmomentaufnehmer ausgerichtet ist, um Störeinflüsse durch einen Wellenversatz zu vermeiden.

Die Ausrichteinrichtung kann Einstelleinrichtungen aufweisen, um die vertikale, horizontale und/axiale Position der Lagerstelle verändern zu können.

Die erfindungsgemäße Kalibriervorrichtung lässt sich zweckmäßigerweise an einer Prüfstandsanordnung einsetzen. Die Prüfstandsanordnung kann eine Prüflingsaufnahme zum Aufnehmen eines Prüflings, eine Belastungseinheit, z. B. eine Asynchronmaschine oder ein Dynamometer und einen zwischen dem Prüfling und der Belastungseinheit angeordneten und mit dem Prüfling der Belastungseinheit gekoppelten Prüflings-Drehmomentaufnehmer aufweisen. Die oben beschriebene Kalibriervorrichtung wird dann zum Kalibrieren des Prüflings-Drehmomentaufnehmers eingesetzt.

Die Belastungseinheit, z. B. die Asynchronmaschine, ist einerseits geeignet, eine Bremslast auf den Prüfling, z. B. einen Motor, aufzubringen. Andererseits kann sie aber auch ein Antriebsmoment für den Motor erzeugen, um z. B. eine Bergabfahrt zu simulieren.

Der Prüflings-Drehmomentaufnehmer kann mit einer Welle einer Belastungseinheit, z. B. einer Asynchronmaschine gekoppelt sein, deren Welle blockierbar ist, um die notwendige Abstützung für das über den Hebelarm eingeleitete Drehmoment zu bilden. Auf diese Weise lässt sich der Wellenstrang durch die Kraftwirkung am Hebelarm verspannen, sodass das erforderliche Drehmoment generiert wird.

Ein Verfahren zum Kalibrieren einer Drehmoment-Messeinrichtung weist die Schritte auf:
- Generieren einer Kraft mit einer Kraftwirkungseinrichtung;
- Einleiten der Kraft in einen Hebelarm;
- Übertragen der Kraft auf einen zu dem Hebelarm gehörigen Lagerflansch und dabei Erzeugen eines Drehmoments;
- Übertragen des Drehmoments auf einen Referenz-Drehmomentaufnehmer;
- Messen des Drehmoments als Referenz-Drehmomentwert mit dem Referenz-Drehmomentaufnehmer;
- Übertragen des gleichen Drehmoments auf einen Prüflings-Drehmomentaufnehmer ;
- Messen des Drehmoments als Prüflings-Drehmomentwert mit dem Prüflings-Drehmomentaufnehmer;
- Vergleichen des Referenz-Drehmomentwerts mit dem Prüflings-Drehmomentwert.

Diese und weitere Vorteile und Merkmale der Erfindung werden nachfolgend anhand eines Beispiels unter Zuhilfenahme der begleitenden Figuren näher erläutert. Es zeigen:
- **Fig.** 1: eine Perspektivansicht einer Vorrichtung zum Kalibrieren einer Drehmoment-Messeinrichtung;
- **Fig.** 2: einen Schnitt durch die Vorrichtung gemäß Fig. 1; und
- **Fig.** 3: eine Perspektivansicht eines aus dem Stand der Technik bekannten Motorprüfstand.

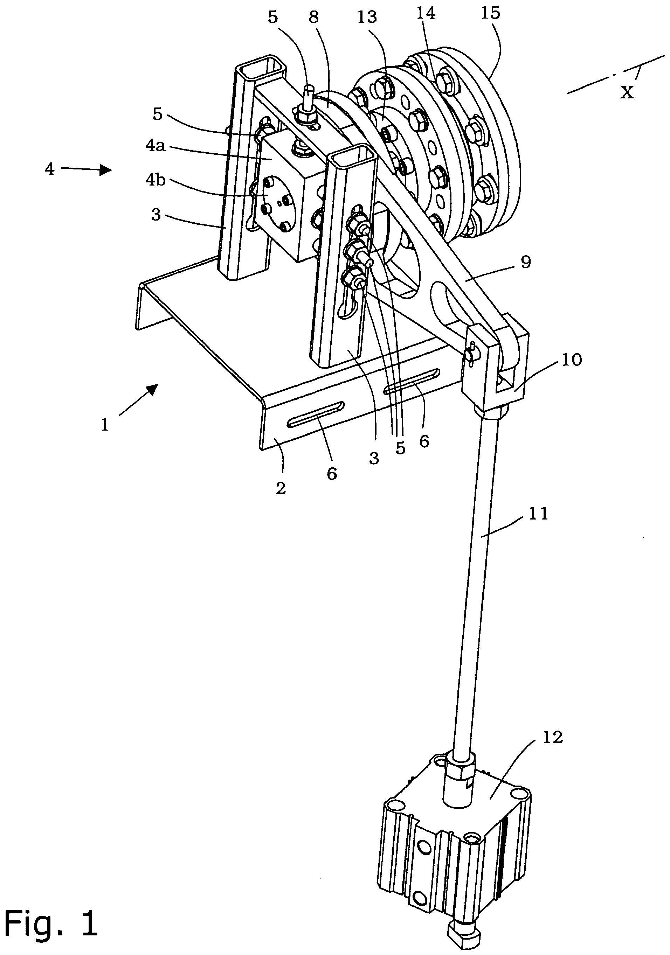

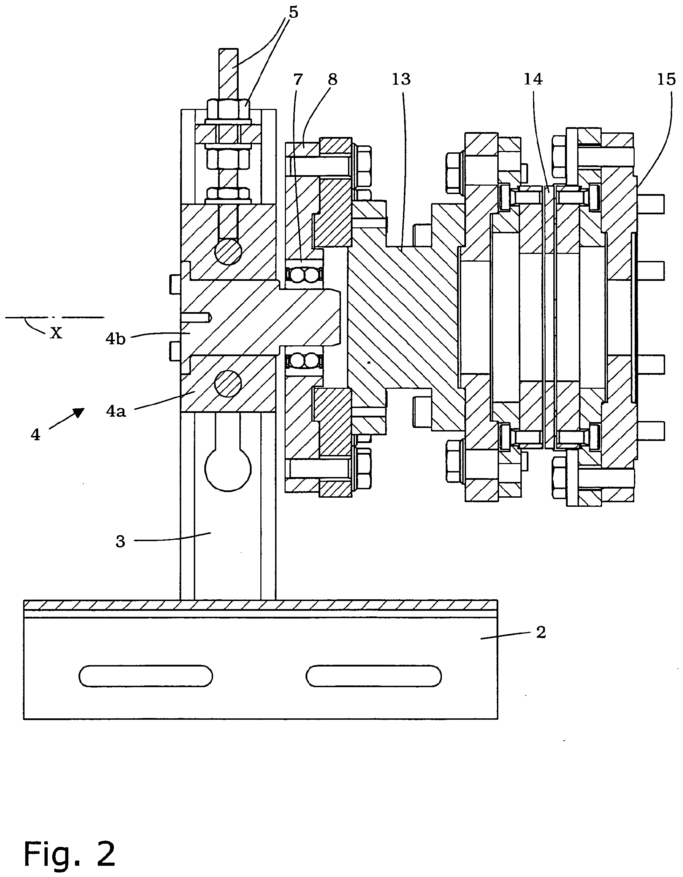

Die Figuren 1 und 2 zeigen die gleiche Vorrichtung, wobei Fig. 2 einen Schnitt entlang der Hauptrichtung (Hauptachse X) darstellt. Die Figuren werden nachfolgend gemeinsam erläutert.

In Fig. 1 ist eine Vorrichtung zum Kalibrieren einer Drehmoment-Messeinrichtung dargestellt. Die Vorrichtung ist zum Teil auf einer Ausrichtvorrichtung 1 aufgebaut, die einen Grundträger 2 aufweist, von dem sich zwei seitliche Stützen 3 vertikal erstrecken.

Zwischen den Stützen 3 ist eine Lagerstelle 4 gehalten, die einen Lagerblock 4a und einen Lagerzapfen 4b aufweist. Die Position der Lagerstelle 4 kann mit Hilfe von Muttern und Gewinden verstellt werden, die in den Figuren gezeigt sind und als Einstelleinrichtungen 5 dienen. Insbesondere ist mit Hilfe der Stellmuttern eine horizontale und vertikale Positionierung der Lagerstelle 4 möglich.

Zusätzlich sind in dem Grundträger 2 Längsnuten 6 vorhanden, mit denen der Grundträger 2 gegenüber einer nicht dargestellten Maschinenbasis axial verstellt werden kann. Somit ist es möglich, die Lagerstelle 4 in beliebigen Raumrichtungen zu positionieren.

Auf dem Lagerzapfen 4b der Lagerstelle 4 ist ein Pendelkugellager 7 gehalten, das einen Lagerflansch 8 eines Hebelarms 9 lagert.

Das auskragende Ende des Hebelarms 9 ist über eine Gabel 10 und ein Gestänge 11 mit einem Pneumatikzylinder 12 verbunden, der als Kraftwirkungseinrichtung dient und den Hebelarm 9 mit einer Kraft beaufschlagt.

Der Lagerflansch 8 ist mit einem als Referenz-Drehmomentaufnehmer dienenden Referenz-Messflansch 13 axial verschraubt, der axial zu dem Lagerflansch 8 positioniert ist. Axial zu dem Referenz-Messflansch 13 ist eine als Ausgleichskupplung dienende Stahl-Lamellenkupplung 14 angeordnet, deren eine Seite mit dem Referenz-Messflansch 13 fest verschraubt ist.

Weiterhin axial zu der Stahl-Lamellenkupplung 14 ist ein Anschlussbereich 15 vorgesehen, an den ein als Prüflings-Drehmomentaufnehmer dienender Prüflings-Messflansch ankoppelbar ist. Der Anschlussbereich 15 ist mit der freien Stahl-Lamellenkupplung 14 verschraubt. Der Prüflings-Messflansch ist den Fig. 1 und 2 nicht dargestellt. In Fig. 3 ist der Prüflings-Messflansch axial zu der Asynchronmaschine 21 angeordnet und mit dem Bezugszeichen 24 gekennzeichnet.

Die vom Pneumatikzylinder 12 erzeugte und über das Gestänge 11 und die Gabel 10 auf den Hebelarm 9 übertragene Kraft bewirkt am Lagerflansch 8 ein Drehmoment, welches vom Referenz-Messflansch 13 gemessen werden kann, um so einen Referenz-Drehmomentwert zu erhalten. Das gleiche Drehmoment wird über die Stahl-Lamellenkupplung 14 auf den Prüflings-Messflansch 24 übertragen, an dem der Prüflings-Drehmomentwert abgenommen werden kann. Der Referenz-Drehmomentwert und der Prüflings-Drehmomentwert lassen sich dann vergleichen, um nachfolgend den Prüflings-Messflansch 24 kalibrieren zu können.

Damit von dem Pneumatikzylinder 12 eine Kraft und damit ein Drehmoment in die Vorrichtung eingebracht werden kann, muss der Prüflings-Messflansch 24 drehfixiert sein. Zu diesem Zweck ist es vorteilhaft, wenn die sich an den Prüflings-Messflansch 24 anschließende, nicht gezeigte Belastungseinheit, z. B. eine Asynchronmaschine, ebenfalls drehfixiert ist. Beispielsweise kann die Welle der Asynchronmaschine blockierbar sein.

Der Pneumatikzylinder 12 kann über ein nicht dargestelltes Proportionalventil angesteuert werden, welches wiederum mit einer Steuerungseinrichtung gekoppelt ist. In der Steuerungseinrichtung kann ein Automatikprogramm hinterlegt sein, zum automatischen Ansteuern des Pneumatikzylinders 12. Auf diese Weise ist es möglich, ein automatisches, z. B. durch eine Norm vorgegebenes Kalibrierprogramm zu verfolgen, um die Kalibrierprozedur ohne Mitwirkung des Bedieners durchführen zu können.

## Patentansprüche

1. Vorrichtung zum Kalibrieren einer Drehmoment-Messeinrichtung, mit
- einer Kraftwirkungseinrichtung (12) zum Erzeugen einer Kraftwirkung;
- einem mit der Kraftwirkungseinrichtung (12) gekoppelten und die Kraftwirkung übertragenden Hebelarm (9), der einen um eine Hauptachse (X) verschwenkbar gelagerten Lagerflansch (8) aufweist;
- einem axial zu dem Lagerflansch (8) angeordneten und mit dem Lagerflansch (8) gekoppelten Referenz-Drehmomentaufnehmer (13); und mit
- einem axial zu dem Referenz-Drehmomentaufnehmer (13) vorgesehenen Anschlussbereich (15), an dem ein die zu kalibrierende Drehmoment-Messeinrichtung bildender Prüflings-Drehmomentaufnehmer (24) ankoppelbar ist, **dadurch gekennzeichnet, dass**
der Lagerflansch (8) des Hebelarms (9) auf einem Pendellager (7) gelagert ist.

2. Vorrichtung nach Anspruch 1, **dadurch gekennzeichnet, dass**
die Kraftwirkungseinrichtung eine fluidbetriebene Zylindereinheit (12), eine elektromotorisch betriebene Spindel-Gewindeeinheit oder einen Servomotor mit Planetengetriebe aufweist.

3. Vorrichtung nach Anspruch 1 oder 2, **dadurch gekennzeichnet, dass**
die Kraftwirkungseinrichtung einen über ein Proportionalventil geregelten Pneumatikzylinder (12) oder Hydraulikzylinder aufweist.

4. Vorrichtung nach einem der Ansprüche 1 bis 3, **dadurch gekennzeichnet, dass**
der Lagerflansch (8) kraftwirkungsmäßig direkt über dem Pendellager (7) gelagert ist, derart, dass Querkräfte, die über den Lagerflansch (8) eingeleitet werden, sämtlich von dem Pendellager (7) aufgenommen werden.

5. Vorrichtung nach einem der Ansprüche 1 bis 4, **dadurch gekennzeichnet, dass**
- eine Steuerungseinrichtung zum Ansteuern der Kraftwirkungseinrichtung (12) vorgesehen ist; und dass
- die Steuerungseinrichtung ein Kalibrierprogramm zum automatischen Ansteuern der Kraftwirkungseinrichtung (12) entsprechend einer vorgegebenen Kalibrierprozedur aufweist.

6. Vorrichtung nach einem der Ansprüche 1 bis 5, **dadurch gekennzeichnet, dass**
der Referenz-Drehmomentaufnehmer (13) als Drehmoment-Messflansch ausgebildet ist.

7. Vorrichtung nach einem der Ansprüche 1 bis 6, **dadurch gekennzeichnet, dass**
axial zwischen dem Referenz-Drehmomentaufnehmer (13) und dem Anschlussbereich (15) eine Ausgleichskupplung (14) angeordnet ist.

8. Vorrichtung nach Anspruch 7, **dadurch gekennzeichnet, dass**
die Ausgleichskupplung (14) geeignet ist, einen Lateralversatz, einen Axialversatz und/oder einen Winkelversatz auszugleichen.

9. Vorrichtung nach Anspruch 7 oder 8, **dadurch gekennzeichnet, dass**
die Ausgleichskupplung (14) und das Pendellager (7) eine Aufhängung mit zwei Gelenkpunkten bilden.

10. Vorrichtung nach einem der Ansprüche 1 bis 9, **dadurch gekennzeichnet, dass**
- eine Lagerstelle (4) zum Tragen des Pendellagers (7) vorgesehen ist;
- eine Ausrichtvorrichtung (1) vorgesehen ist, zum vertikalen, horizontalen und/oder axialen Positionieren der Lagerstelle (4) relativ zu einer Maschinenbasis.

11. Vorrichtung nach Anspruch 10, **dadurch gekennzeichnet, dass**
die Ausrichtvorrichtung (1) Einstelleinrichtungen (5) aufweist, zum Verändern der vertikalen, horizontalen und/oder axialen Position der Lagerstelle (4).

12. Prüfstandsanordnung, mit
- einer Prüflingsaufnahme zum Aufnehmen eines Prüflings (20);
- einer Belastungseinheit (21);
- einem zwischen dem Prüfling (20) und der Belastungseinheit (21) angeordneten und mit dem Prüfling (20) und der Belastungseinheit (21) gekoppelten Prüflings-Drehmomentaufnehmer (24); und mit
- einer Kalibriervorrichtung nach einem der Ansprüche 1 bis 11, zum Kalibrieren des Prüflings-Drehmomentaufnehmers (24).

13. Prüfstandsanordnung nach Anspruch 12, **dadurch gekennzeichnet, dass**
- die Belastungseinheit (21) eine mit dem Prüflings-Drehmomentaufnehmer (24) koppelbare Welle aufweist; und dass
- die Welle blockierbar ist.

14. Verfahren zum Kalibrieren einer Drehmoment-Messeinrichtung unter Verwendung der Vorrichtung einer der vorhergehenden Ansprüche 1-13, mit den Schritten:
- Generieren einer Kraft mit der Kraftwirkungseinrichtung (12);
- Einleiten der Kraft in den Hebelarm (9);
- Übertragen der Kraft auf den zu dem Hebelarm (9) gehörigen Lagerflansch (8) und dabei Erzeugen eines Drehmoments;
- Übertragen des Drehmoments auf den Referenz-Drehmomentaufnehmer (13);
- Messen des Drehmoments als Referenz-Drehmomentwert mit dem Referenz-Drehmomentaufnehmer (13);
- Übertragen des gleichen Drehmoments auf den Prüflings-Drehmomentaufnehmer (24);
- Messen des Drehmoments als Prüflings-Drehmomentwert mit dem Prüflings-Drehmomentaufnehmer (24);
- Vergleichen des Referenz-Drehmomentwerts mit dem Prüflings-Drehmomentwert.

## Claims

1. Device for calibrating a torque measuring device, with
- a force effect device (12) for producing a force effect;
- a lever arm (9) coupled to the force effect device (12) and transmitting the force effect, which comprises a bearing flange (8) pivotable around a principal axis (X);
- a reference torque sensor (13) arranged axially to the bearing flange (8) and coupled to the bearing flange (8); and with
- a connection portion (15) provided axially to the reference torque sensor (13), to which a test subject torque sensor (24) forming the torque measuring device to be calibrated can be coupled, **characterised in that**
the bearing flange (8) of the lever arm (9) is mounted on a self-aligning bearing (7).

2. Device in accordance with claim 1, **characterised in that**
the force effect device is comprises a fluid-operated cylinder unit (12), a spindle thread unit operated by an electric motor or a servomotor with a planetary gear unit.

3. Device in accordance with claim 1 or 2, **characterised in that** the force effect device comprises a pneumatic cylinder (12) or hydraulic cylinder controlled by means of a proportional valve.

4. Device in accordance with one of the claims 1 to 3, **characterised in that** in relation to force, the bearing flange (8) is supported directly by means of the self-aligning bearing (7) so that transverse forces that are introduced via the bearing flange (8) are all borne by the self-aligning bearing (7).

5. Device in accordance with one of the claims 1 to 4, **characterised in that**
- a control device is provided for controlling the force effect device (12); and that
- the control device comprises a calibration program for automatic control of the force effect device (12) in accordance with a predetermined calibration procedure.

6. Device in accordance with one of the claims 1 to 5, **characterised in that** the reference torque sensor (13) is embodied as torque measurement flange.

7. Device in accordance with one of the claims 1 to 6, **characterised in that** a compensating coupling (14) is arranged axially between the reference torque sensor (13) and the connection portion (15).

8. Device in accordance with claim 7, **characterised in that** the compensating coupling (14) it is suitable for compensation of a lateral displacement, an axial displacement and/or an angular displacement.

9. Device in accordance with claim 7 or 8, **characterised in that** the compensating coupling (14) and the self-aligning bearing (7) form a suspension with two pivot points.

10. Device in accordance with one of the claims 1 to 9, **characterised in that**
- a bearing position (4) is provided for supporting the self-aligning bearing (7);
- an alignment device (1) is provided for vertical, horizontal and/or axial positioning of the bearing position (4) relative to a machine base.

11. Device in accordance with claim 10, **characterised in that** the alignment device (1) has adjustment devices (5), for altering the vertical, horizontal and/or axial position of the bearing position (4).

12. Test rig arrangement, with
- a test subject mounting for supporting a test subject (20);
- a loading unit (21);
- a test subject torque sensor (24) arranged between the test subject (20) and the loading unit (21) and coupled with the test subject (20) and the loading unit (21): and with
- a calibration device in accordance with one of the claims 1 to 11, for calibrating the test subject torque sensor (24).

13. Test rig arrangement in accordance with claim 12, **characterised in that**
- the loading unit (21) comprises a shaft that can be coupled with the test subject torque sensor (24); and that
- the shaft can be locked.

14. Method for calibrating a torque measuring device using the device of one of the preceding claims 1-13, with the steps:
- generating a force with the force effect device (12);
- introducing the force into the lever arm (9);
- transmitting the force to the bearing flange (8) incorporated with the lever arm (9) and thereby generating a torque;
- transmitting the torque to the reference torque sensor (13);
- measuring the torque as reference torque value with the reference torque sensor (13);
- transmitting the same torque to the test subject torque sensor (24);
- measuring the torque as test subject torque value with the test subject torque sensor (24);
- comparing the reference torque value with the test subject torque value.

## Revendications

1. Dispositif pour étalonner un dispositif de mesure de couple, avec
- un dispositif d'effet dynamique (12) pour produire un effet dynamique ;
- un bras de levier (9) qui est couplé au dispositif d'effet dynamique (12), qui transmet l'effet dynamique et qui comporte une bride de palier (8) montée pivotante sur un axe principal (X) ;
- un capteur de couple de référence (13) qui est disposé axialement par rapport à la bride de palier (8) et qui est couplé à celle-ci ; et avec
- une zone de raccordement (15) qui est prévue axialement par rapport au capteur de couple de référence (13) et à laquelle peut être couplé un capteur de couple de pièce d'essai (24) qui forme le dispositif de mesure de couple à étalonner, **caractérisé en ce que**
la bride de palier (8) du bras de levier (9) est montée sur un palier pendulaire (7).

2. Dispositif selon la revendication 1, **caractérisé en ce que** le dispositif d'effet dynamique comporte une unité formant vérin à commande par fluide (12), une unité broche-filetage à commande par moteur électrique ou un servomoteur à engrenage planétaire.

3. Dispositif selon la revendication 1 ou 2, **caractérisé en ce que** le dispositif à effet dynamique comporte un cylindre pneumatique (12) ou un cylindre hydraulique réglé par l'intermédiaire d'une soupape proportionnelle.

4. Dispositif selon l'une des revendications 1 à 3, **caractérisé en ce que** la bride de palier (8) est montée directement au-dessus du palier pendulaire (7), en termes d'effet dynamique, de telle sorte que les forces transversales qui sont introduites par l'intermédiaire de la bride de palier (8) soient reçues dans leur ensemble par le palier pendulaire (7).

5. Dispositif selon l'une des revendications 1 à 4, **caractérisé en ce que**
- un dispositif de commande est prévu pour commander le dispositif à effet dynamique (12) ; et **en ce que**
- le dispositif de commande comporte un programme d'étalonnage pour commander automatiquement le dispositif à effet dynamique (12) suivant une procédure d'étalonnage prédéfinie.

6. Dispositif selon l'une des revendications 1 à 5, **caractérisé en ce que** le capteur de couple de référence (13) est conçu comme une bride de mesure de couple.

7. Dispositif selon l'une des revendications 1 à 6, **caractérisé en ce qu'**un dispositif d'équilibrage (14) est disposé entre le capteur de couple de référence (13) et la zone de raccordement (15).

8. Dispositif selon la revendication 7, **caractérisé en ce que** l'accouplement d'équilibrage (14) est apte à équilibrer un déport latéral, un déport axial et/ou un déport angulaire.

9. Dispositif selon la revendication 7 ou 8, **caractérisé en ce que** l'accouplement d'équilibrage (14) et le palier pendulaire (7) forment une suspension avec deux points d'articulation.

10. Dispositif selon l'une des revendications 1 à 9, **caractérisé**
- **en ce qu'**il est prévu un point d'appui (4) pour porter le palier pendulaire (7) ;
- **en ce qu'**il est prévu un dispositif d'alignement (1) pour le positionnement vertical, horizontal et/ou axial du point d'appui (4) par rapport à une base de machine.

11. Dispositif selon la revendication 10, **caractérisé en ce que** le dispositif d'alignement (1) comporte des dispositifs de réglage (5) pour modifier la position verticale, horizontale et/ou axiale du point d'appui (4).

12. Dispositif formant banc d'essai, avec
- un logement de pièce à tester pour recevoir une pièce à tester (20) ;
- une unité de charge (21) ;
- un capteur de couple de pièce à tester (24) qui est disposé entre la pièce à tester (20) et l'unité de charge (21) et qui est couplé à la pièce à tester (20) et à l'unité de charge (21) ; et avec
- un dispositif d'étalonnage selon l'une des revendications 1 à 11, pour étalonner le capteur de couple de pièce à tester (24).

13. Dispositif formant banc d'essai selon la revendication 12, **caractérisé en ce que**
- l'unité de charge (21) comporte un arbre apte à être couplé au capteur de couple de pièce à tester (24) ; et **en ce que**
- l'arbre est apte à être bloqué.

14. Procédé pour étalonner un dispositif de mesure de couple à l'aide du dispositif de l'une des revendications 1 à 13 précédentes, avec les étapes :
- de production d'une force avec le dispositif d'effet dynamique (12) ;
- d'introduction de la force dans le bras de levier (9) ;
- de transmission de la force à la bride de palier (8) appartenant au bras de levier (9), et de production d'un couple ;
- de transmission du couple au capteur de couple de référence (13) ;
- de mesure du couple comme valeur de couple de référence avec le capteur de couple de référence (13) ;
- de transmission du même couple au capteur de couple de pièce à tester (24) ;
- de mesure du couple comme valeur de couple de pièce à tester avec le capteur de couple de pièce à tester (24) ;
- de comparaison de la valeur de couple de référence avec la valeur de couple de pièce à tester.
